Europäisches Patentamt

European Patent Office

Office européen des brevets

(19)

(11) Publication number: **0 043 391**
**A1**

(12) EUROPEAN PATENT APPLICATION

(21) Application number: 80302192.2

(22) Date of filing: 30.06.80

(51) Int. Cl.³: **G 06 F 13/00**

(43) Date of publication of application: 13.01.82
Bulletin 82/2

(84) Designated Contracting States: BE CH DE FR GB IT LI NL SE

(71) Applicant: International Business Machines Corporation, Armonk, N.Y. 10504 (US)

(72) Inventor: Maddock, Robert Frank, 34 Welbeck Avenue, Southampton (GB)
Inventor: Marks, Brian Lawton, 354 Hursley Road Chandler's Ford, Eastleigh Hampshire (GB)
Inventor: Minshull, John Francis, 4 Austen Avenue Oliver's Battery, Winchester Hampshire (GB)
Inventor: Pinnell, Martin Coxwell, 47 Chilbolton Avenue, Winchester Hampshire (GB)

(74) Representative: Bailey, Geoffrey Alan, IBM United Kingdom Patent Operations Hursley Park, Winchester, Hampshire, SO21 2JN (GB)

(54) Virtual memory terminal.

(57) A microprocessor controlled terminal (1) with keyboard input (4) and CRT display output (6) employs virtual memory and store management techniques to enable an operator to run any of a wide variety of different applications (e. g. text, image, graphics, data entry, reservation, payroll etc.) in the terminal. Application procedure records and data records relating to a selected application are copied as required from a local backing store (14) and/or over a communications link (9) from a main store (16) of central processing unit (12) into a dynamically managed region (20) of random access memory (RAM) (3) under control of primitive microprocessor control instructions permanently held in read-only store (10). In view of the virtual memory techniques employed, the backing store (14) and main store (16) appear to be logical extensions of RAM (3). The records copied to region (20) are contiguously stored as variable length segments in successive free storage locations and are chained together for subsequent access in a plurality of double-threaded chains. Previously marked procedure (and possibly data) are copied from region (20) into directly addressable fixed location (19) of RAM (3) and serve to configure terminal (1) to interact with data and procedure in region (20), in accordance with the requirements of the selected application.

Contiguity of segments in region (20), is restored following disruption caused during running of the application. Storage management techniques provide for store-through of segments in RAM (3) to the backing store (14) and main store (16) and identifies segments within RAM (3) available for deletion from RAM on a least-recently-used basis to provide additonal space for new segments.

## VIRTUAL MEMORY TERMINAL

### Introduction

The invention relates to a data processing terminal
having an in-built microprocessor or controller and random
access memory that can be configured by a user to run a wide
variety of different applications.

The advent of the microprocessor has made it possible to
take function out of a traditional central processor and put
it instead in a terminal itself.  Distributed processing
potentially involves executing a very wide variety of useful
local functions in a very wide range of terminal devices.
Current terminal designs normally install the distributed
function as microprocessor ROS code and do not provide for
modification or major change during the life of the terminal
device.

Whilst the distribution of function from the computer
centres outwards towards the terminals is a continuing trend,
the practical bounds for distributed intelligence are set by
the fact that nearly all useful computable information is
subject to change and terminal users can only efficiently
keep abreast of change through access to a pool of information which is accessible to all.  Thus, although it is
desirable for a terminal to be able to execute a full range
of applications, for example, text, image, graphics, data
entry, reservation, payroll, etc. on a distributed basis, it
is also an advantage for the filing and retrieval of
'permanent' information to be handled centrally.  Accordingly, the applications programs available for selection by a
terminal operator are preferably stored and maintained by a central processor to be distributed on request to a remote
terminal where the application is run.  By this means the
latest versions of the application programs are available to
all users at all times.

The concept of a large number of remote terminals each
of which may be individually configured as required so as to
run a selected application, although clearly commercially
attractive, poses several problems.  First, storage space
must be made available to hold the application code of the
selected program and still leave sufficient space for the
user data.  It will sometimes happen that the storage space
available in a terminal, typically 64K bytes, is insufficient
for this purpose.  Furthermore, the storage requirements of
code and data differ so much from one application to another
that it may be economically undesirable to provide each terminal with sufficient RAM to enable the most space-consuming
application to be run, even if it were possible to put a
reliable figure on this requirement.  Conversely, technical
advances in high capacity stores such as the so-called
'floppy' disks, magnetic bubble stores and stores utilising
charge-coupled devices etc. mean that the cost per bit for
storage is progressively falling.  Accordingly, depending on
economic considerations, additional storage capacity may be
made available to a terminal by providing it with a backing
store having a capacity of for example a megabyte, and using
one or other of these small size but high capacity storage
technologies.

The provision of additional storage space by this means
provides difficulties for the application programmer in that
an application written for one technology mix may not necessarily be suitable for running on a different technology mix

UK9-80-005                              3

without re-writing those parts of the program which refer to storage. The underlying philosophy of the terminal design is to provide a more versatile device for the operator and at the same time to simplify the over-all programming task where possible. Thus, the operator should have the ability to select applications to run on the terminal, the freedom to supplement the terminal RAM with additional storage capacity, and flexibility to change the technology selected for the backing store as new technologies are developed, should this be desirable. This design philosophy has been successfully implemented by adopting some virtual memory techniques in the terminal design such as are currently used so successfully in large systems such as IBM System/370. (IBM is a registered trade mark of International Business Machines Corporation.) By this means the terminal is made to run its application programs with virtual addressing so that the actual storage size and technological requirements of real addressing are transparent to the application programmer. Additionally in the case where the terminal is operated on-line or in dial-up mode to a central processing system, the host store may also be virtually addressed by the application program should the terminal store and, if provided, a backing store still prove to be inadequate.

Dynamic storage allocation systems can be classified into two types: those that move information around the store and those that do not. System/370 virtual memory control programs do not move information around in RAM (although they do move information between RAM and a backing store). The reason why information is not moved within the RAM is because the system is expected to have either enough interactive users, or a long enough batch job stream to consume all available time. The virtual memory mechanism is required to cause the minimum of interference with the computing engine.
Further, associative registers are used to ensure a fast
translation from a virtual address to a real address and high
speed channels are provided for roll-in and roll-out.  Accordingly, storage is allocated in fixed block sizes to match the
associative address translation, and data is moved from RAM
to a backing store and vice versa in fixed page sizes to
match the storage block allocation.  For a description of a
virtual machine control program see IBM Virtual Machine
Facility/370:  Introduction, available under order number
GC20-1800-9 published by International Business Machines
Corporation.

A microprocessor in an intelligent terminal is in a
different environment because its justification is to provide
responsiveness to people rather than batch job throughput.
Since a single terminal controller is primarily required to
respond to its operator, its engine is often unoccupied.  It
follows that a microprocessor in an interactive terminal has
time to spare for storage management and is not subject to
the same constraints as is the case with implementation of
virtual storage in IBM System/370.

This freedom means that consideration may be given to
paging of data in logical records, rather than as blocks of
bytes which happen to lie on some power-of-2 address
boundary.  The logical units of a user's data such as
'procedures' or 'data structures' tend, in practice, to be
first accessed by user programs in a distinct way by means,
for example, of a procedure call or some other explicit
binding operation.  In some languages, the procedure or data
structure may be explicitly released as well.  Information of
this nature, which is often not available to a fixed-block- size storage manager, can be utilised by a logical terminal
store manager to use space more efficiently. The use of
variable length records can result in fragmentation of the
storage space in the terminal, however this is not a problem
in view of the compute time available within the terminal to
move data and so to recover from the fragmentation of storage. Moreover, while it may appear at first sight that the
writing of application programs will be made difficult by the
movement of data within RAM, it will be shown that means can
be provided through automatic compilation of programs to protect the application programmer from concern over the
movement of data.

A data processing terminal, according to the invention,
incorporates a microprocessor, a non-volatile read-only store
for storing primitive instruction codes for said microprocessor, and a random access memory for receiving and
storing application procedure and data in the form of
variable length records, means operable in response to
identification of a selected application to be run in said
terminal to load records to perform relating to said
application and data records to be operated on during
execution of said application into said random access memory
as required, each record being provided with an individual
header and being stored contiguously as variable length
segments in successive free storage locations in said random
access memory, each segment being linked in accordance with
predetermined address pointer rules for subsequent access to
other selected segments by means of address pointers inserted
in the segment headers, means for identifying and copying
selected procedure (and possibly data) into a pre-allocated
region of said random access memory, said copied procedure
(and possibly data) constituting directly addressable code effective under control of said microprocessor to configure
said terminal to interact with data and procedure segments in
said random access memory in accordance with the requirements
of the selected application, said microprocessor being operable during use to modify segments, and create new segments
as required during execution of said application; to delete
segments on priority basis in order to provide additional
space in said random access memory; to re-arrange segments so
as to restore contiguity of said segments within said random
access memory should this be broken as a result of running
said application; and to modify said address pointers as
required to maintain the integrity of said predetermined
address pointer rules.

   In order that the invention may be fully understood, a
preferred embodiment thereof will now be described with
reference to, and as illustrated in, the accompanying
drawings.

   In the drawings:-

   Figure 1 shows schematically various system configurations for the virtual memory terminal, subject of the present
invention;

   Figure 2 shows schematically the allocation of storage
in a selected system configuration to illustrate the
operation of the present invention;

   Figure 3 shows the structure of a variable length
storage segment of data or procedure;

Figure 4 shows schematically a segment ACCESS chain used to link segments in RAM;

Figure 5 shows and ACCESS chain structure in more detail in order to illustrate the organisation of forward and backward address pointers;

Figure 6 shows the structure of a variable length fragment of free space;

Figure 7 shows schematically a FREE SPACE chain used to link free space fragments in RAM;

Figure 8 shows schematically a HOLD chain used to link segments together in queues associated with storage management sequential processes;

Figure 9 shows schematically an UNMOD chain used to link segments together in an order derived in accordance with a least-recently-used algorithm; and

Figure 10 illustrates the traffic flow of segments between the various segment HOLD and UNMOD chains.

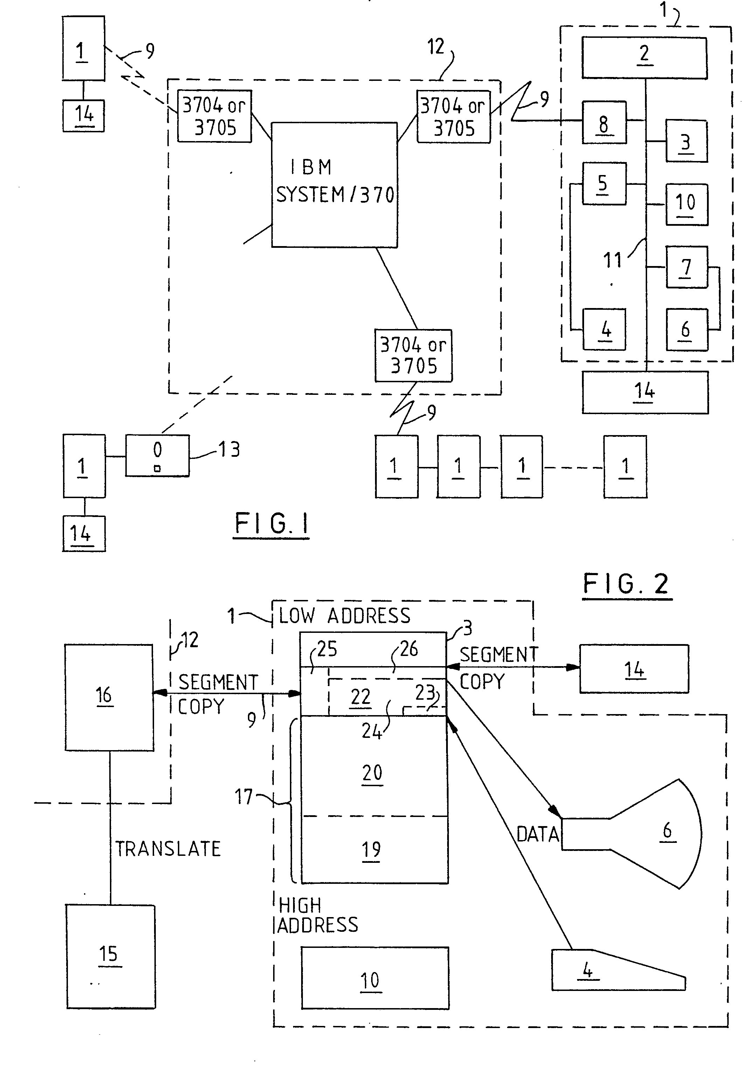

Typical system configurations for the virtual memory terminal, subject of this invention, are depicted in Figure 1. Each terminal 1 is conventional in that it has a microprocessor controller 2, a certain amount of random access memory (RAM) 3 (typically 42K bytes or 64K bytes), data entry means 4 and associated interface adapter 5, data output means 6 and associated control circuits 7, a communications adapter 8 for attachment to an external data communications link 9, read-only store (ROS) 10 in which base control program primitive instruction codes for the microprocessor are permanently held, all of which are interconnected by means of a
common bus 11 which carries data, address signals and interrupt signals.  Details of such a terminal configuration may
be obtained by reference to our published European Patent
Application No. 0009594.

Each terminal is unconventional in that virtual memory
techniques are employed under control of a novel store
manager forming part of the base control program to enable
the terminals to be individually configured as required by
the terminal operator to run any of a wide variety of
different application programs.  The available application
programs are all stored and maintained centrally on a central
processing unit (CPU) 12 and are available to be copied as
required by the flow of program execution into the RAM 3 of
the terminal, after which the terminal operates in accordance
with the loaded instructions to perform the selected
application.  The storage of all programs centrally enables
program update, new releases and new versions of programs to
be made available simultaneously to all users.

Program distribution from the central storage area to a
terminal may be achieved in one of several ways.  In one
arrangement the terminal may be permanently connected over a
data communications link 9 to the CPU 12 as represented by
the solid lines 9 in Figure 1.  In another arrangement, where
it is not essential for the terminal to be on-line to the CPU
12 at all times, a dial-up link represented by a dashed line
9 in the figure is sufficient.  In yet another arrangement
the terminal is operated entirely as a stand-alone device
with the applications programs distributed to the user from
the central repository on a floppy disk or diskette 13.  The terminal is then configured to run the selected application
by loading segments of the program as required by the flow of
program execution.

The RAM 3 provided in each terminal is volatile and
therefore subject to loss of data as a result of power
failure, processor error, etc. Accordingly, a non-volatile
backing store 14 (capacity ranging from 250K bytes to 1M
bytes) may be added to a terminal to receive and protect data
and instructions copied from RAM. Since the use of virtual
memory techniques enables applications to be run in the
terminal irrespective of the type of hardware employed, the
nature of the technology (magnetic disk, magnetic bubble,
etc.) used to provide this additional storage capacity is
unimportant. Apart from saving the data, the additional
capacity provided by the backing store enables some applications to be run which would not otherwise be possible
without access to the CPU store. This is particularly useful
where the transmission speed of the link may be inadequate to
support terminal activity or where the terminal is used as a
stand-alone device or only having infrequent access to the
CPU store over a dial-up link.

The virtual memory terminal can be implemented with a
variety of microprocessors and is designed for use with any
commercially available central processor capable of storing
and supplying the variety of application programs over a
communications link in response to terminal requests. In the
example shown in Figure 1, the terminals employ a Motorola
M6800 microprocessor and are connected over communication
links via IBM 3704 or 3705 Communication Controllers into an
IBM System/370 central processor.

The system configuration to be described hereinafter as
the preferred embodiment of the invention includes a terminal
with keyboard input 4, CRT display output 6 provided with a
disk backing store 14 and having access to a central processor over a communications link 9.  The various storage
components utilised in this configuration to which the
application has access are shown in Figure 2.  The selection
of application programs available to be run on the virtual
memory terminal 1 are held centrally in a host archive store
15.  If not already available to the user or his virtual
memory (including main store 16) the data and/or procedure
records associated with a selected application are inserted
into the terminal virtual memory via main store 16 of the
host processor 12 in response to a terminal user command
identifying the selected application.  The form of the application in main store, which in view of the virtual memory
organisation of the terminal is in fact a logical extension
of the terminal RAM 3, is as lists of variable length
records.  Whilst the archived application programs may be
maintained in the required form in the archive store, this
need not necessarily be the case.  Thus, where the program is
archived in a different form, for example in EPCDIC source
code, or in the case of a text application program for
example as System Network Architecture (SNA) Character Set
(SCS) format, a transformation into terminal store format is
necessary.

The contents, structure and mode of operation of the
terminal microprocessor provide the key to the method by
which the flexibility and efficiency of operation of the
terminal is achieved.  The variable length records arriving
over the communications link 9 consist of data or procedure
prefixed with a 6-byte header including a identifier and data or procedure length.  These records are each provided with
additional header information as will be described later and
stored contiguously as variable length segments in successive
free storage location in the application area 17 of RAM 3
under control of the base control program held in ROS 10.
The application area 17 is functionally divided into two
parts by a boundary 18 which is dynamically set during the
loading of the selected application.  The control program
procedure which loads a selected application program copies
any procedure, that is the body of the segment stripped of
its header information, previously marked by the application
programmer as 'fixed code' from the segments in region 17
into the higher address region 19 of the application area 17
and sets the boundary 18 accordingly.  The 'fixed code' is
thereafter conventionally addressed by 16 bit real addresses
known at compile time for direct access by the microprocessor.  The fixed code and any embedded data in these
fixed locations of RAM directly addressable by the microprocessor ensure that the most frequently executed parts of
an application program are most efficiently accessed.  The
fixed area may also contain 'locators' hereafter described
which provide access to transient procedures and data.

The remaining part 20 of the application area 17 is a
dynamically managed working region for the segments of
application data, to be operated on in accordance with the
requirements of the selected application, and segments of
procedure which have a transient use for the currently
executing application are kept.  The ratio of the amount of
procedure forming the fixed code to data (and transient
procedure) held in the dynamically managed working area 20
for individual applications can vary widely.  The boundary 18
of this region is only set once all the fixed code is loaded and, by this means, considerable flexibility in the allocation of limited storage space to application data and fixed
code procedure is achieved.  In addition to partitioning area
17 as described above, the store manager microcode manages
the movement of segments within working area 20 using
extended list processing techniques, as will be described in
detail hereinafter, to ensure that the available space is
fully and efficiently allocated and contains the required
data and procedure for the currently executing application.

Region 21 at the lowest address and of RAM 3 extends
over 256 bytes of storage which, being addressable by an
8-bit address, is more rapidly accessible than the remainder
of the RAM.  Such fast access regions are conventionally
found in microprocessor controlled terminals.  In the present
case part of the region 21 is used to store control information including fixed-location headers of segment access
chains and control chains which will be described in detail
hereinafter, and part is kept available for use by application programs.

Device buffers necessary for the asynchronous transfer
of bytes of data between the working region 20 and attached
devices themselves are implemented, in conventional manner,
in predetermined fixed location 22 of RAM.  Thus, with the
current configuration in which the terminal is attached to a
keyboard 4, a CRT display device 6, a communications link 9,
and a backing store 14;  a keyboard buffer 23 (10 bytes of
RAM), CRT refresh buffers 24 (6K bytes of RAM), communications link buffer 25 (2K bytes of RAM), and backing store
buffer 26 (1K bytes of RAM) are all implemented in region 22.

The base control program provides the means of loading
variable length records of procedures and data from either
the backing store 14 or host processor 12.  It is the essential code required to make the terminal operate following
power on, and it is permanently installed within the
terminal, as previously mentioned, in ROS 10.  It consists of
three parts namely (1) interrupt handlers, (2) storage management procedures, and (3) a scheduler/dispatcher supporting a
number of co-operating sequential processes - each of which
is described below.

An interrupt handler is associated with each of the
device buffers 23, 24, 25 and 26 implemented in region 22 of
RAM 3.  Each such interrupt handler is designed to execute in
response to predetermined signals on the microprocessor bus
11 and to transfer bytes of data between pre-allocated buffer
regions of RAM 3 and the associated device (either as input
to a RAM buffer or as output from a RAM buffer according to
the nature of the device).  The timing of such byte transfers
is dictated by the associated external devices which are not
naturally synchronised the one with the others.

Storage management procedures are provided in order to
allow a number of sequential processes described below to
communicate together and to pass data in an orderly fashion
between themselves.  Each sequential process may then move
data between one of the hereinbefore mentioned pre-allocated
device buffers and the working region 20 of RAM.  Five essential storage management procedures are provided:

CREATE-SEGMENT specifying a number of bytes (in the
range 1 to 1023) and an identifier (being 32-bit code) causes
either the required number of bytes to be allowed in region

0043391

20 of RAM 3 and prefixed with a 16-byte header described below, or a signal to be returned indicating that storage of the required size cannot be allocated because previous allocations have fragmented or consumed all of the available RAM.

LOCATE-SEGMENT specifying a 32-bit identifier returns either the address in region 20 of RAM 3 and the length of a storage segment previously created in region 20 of RAM 3 with that identifier, or an indication that no storage segment with that identifier is in region 20 of RAM 3.

DESTROY-SEGMENT specifying a 32-bit identifier releases any storage previously allocated in region 20 of RAM 3 with that identifier (though retaining its 16-byte header and flagging it as "deleted" for reasons which will be described below); except that if no storage segment with that identifier is in region 20 of RAM 3, either a dummy storage segment of zero length prefixed with a 16-byte header is created and flagged as "deleted" or a signal is returned indicating that a 16-byte header cannot be allocated because previous allocations have fragmented or consumed all of the available space in the region 20.

ENQUEUE-SEGMENT specifying the address of a storage segment in region 20 of RAM 3 (as ascertained by the procedure LOCATE-SEGMENT hereinbefore described) and specifying a pre-allocated 32-bit word in fast access region 21 of RAM containing two 16-bit addresses and serving as the origin of a double-threaded access or control chain of storage segments, enters the addressed storage segment either at the head of the specified chain (yielding a "last-in-first-out" queue) or at the tail of the specified chain (yielding a "first-in-first-out" queue) as required.  Access and control chains of storage segments will be described in detail hereinafter.

DEQUEUE-SEGMENT specifying an aforementioned
pre-allocated 32-bit word in fast access region 21 of RAM
serving as the origin of a double-threaded access or control
chain of storage segments, returns either the segment
identifier, the address, and the length of the first or the
last segment as required in the specified chain of segments,
or a code indicating that the chain is empty.

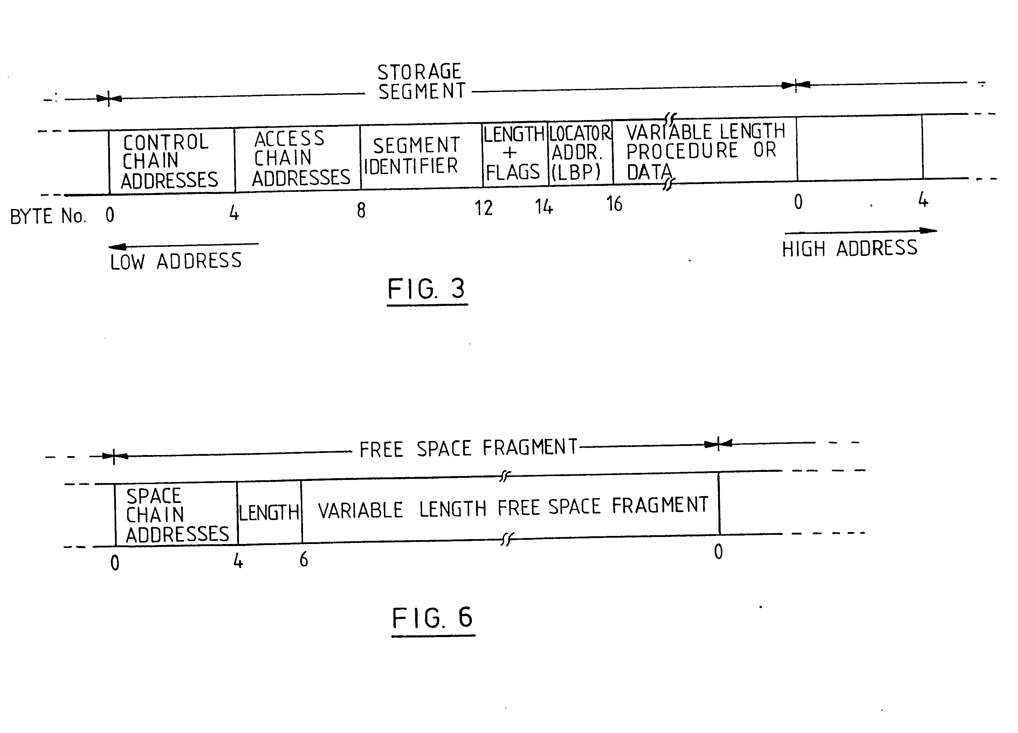

In order to shorten the path when searching working
region 20 of the RAM for a specified segment, each segment is
enqueued into one of 16 double-threaded ACCESS chains
selected by hashing the pre-allocated 32-bit segment identifier. Segments are also enqueued into one or more CONTROL
chains associated with sequential processes hereinafter described. Thus, in order to perform operations of creating,
finding, destoying, enqueuing and dequeuing storage segments,
each such storage segment in the RAM 3 is prefixed with a
16-byte header as aforesaid. A storage segment is shown in
Figure 3 from which it is seen that the header contains the
following fields:

i)     32-bit double-threaded CONTROL chain addresses linking
       segments into queues associated with said storage
       management sequential processes,

ii)    32-bit double-threaded ACCESS chain addresses linking
       together approximately one sixteenth of the segments
       currently in RAM 3,

iii)   32-bit pre-allocated segment identifier,

iv)     the length of the body of the storage segment (10 bits
        of 2 byte field),

v)      various attribute flags (remaining bits of said 2 byte
        field) to be described hereinafter,

vi)     address of a 'locater' also to be described hereinafter associated with the storage segment, or zero if
        no 'locater' is associated with the storage segment.

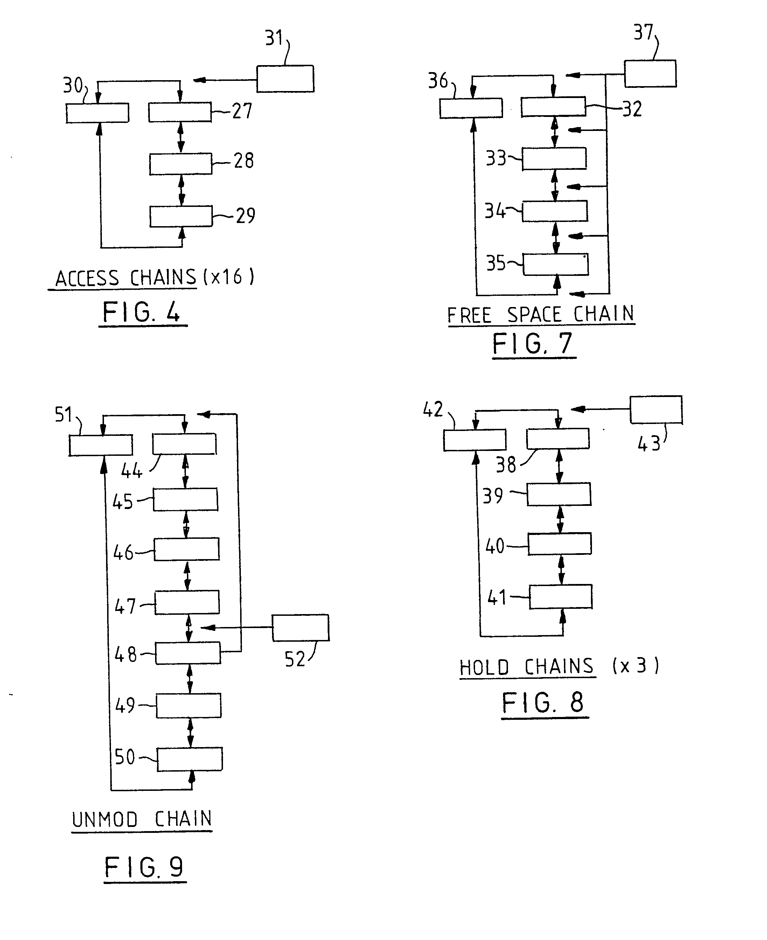

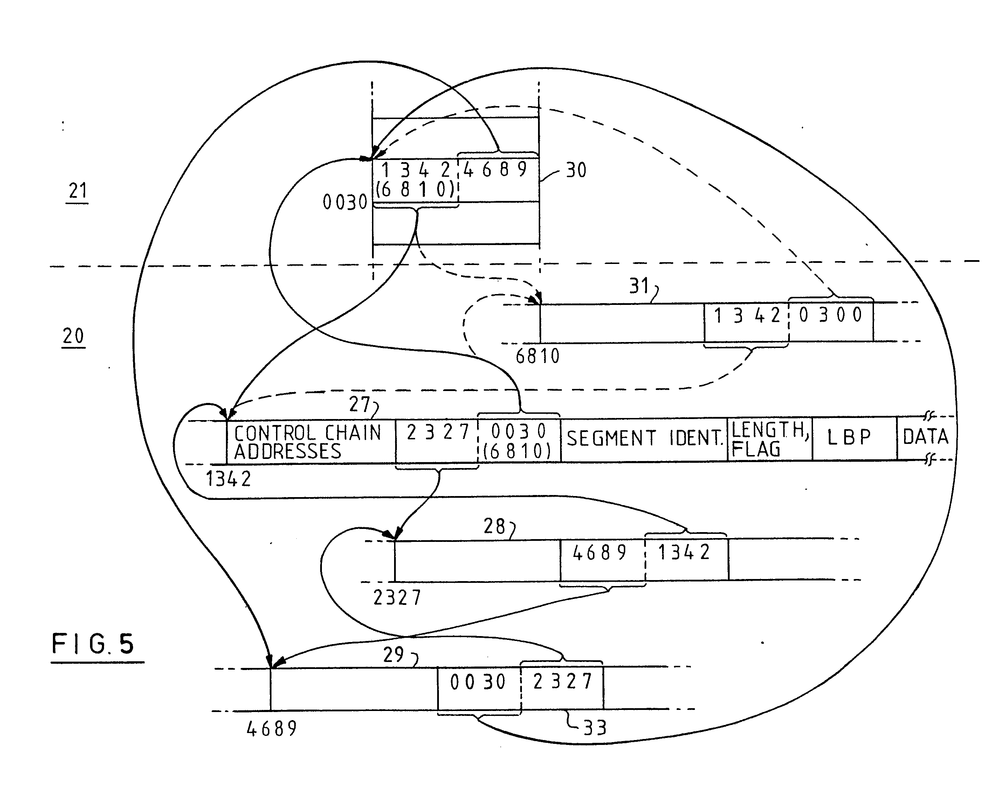

Before proceding further with the detailed description
of the terminal operation, a brief explanation of the organisation of a double-threaded chain structure is appropriate.
The chain selected as an example is one of the sixteen
double-threaded ACCESS chains by which all segments in RAM
are permanently linked.  Such a chain is shown schematically
in Figure 4 and in more detail in Figure 5.  Here, three
storage segments 27, 28 and 29 are chained together and
linked to an ACCESS chain header 30 permanently held in a
predetermined location in the rapid access region 21 of RAM 3
as previously mentioned.  Figure 5 shows the region 21 which
contains the headers of the various ACCESS and CONTROL chains
with the selected ACCESS chain header 28 linked to the three
segments 27, 28 and 29 in the working area 20 of RAM.  For
the purpose of illustration the real addresses of the header
and segments are added.  The organisation of the chain is as
follows:  The real address (1342) of the first segment 27 and
the real address (4689) of the last segment 29 are written in
the access header 30 as the forward and backward 16-bit
pointers to the first and last segments respectively in the
ACCESS chain.  The ACCESS chain field of the first segment 27
contains a forward pointer to the real address (2327) of the
second segment 28 which was written in the working region 20 of RAM and a backward pointer to the real adress (0030)of the
ACCESS chain header permanently located in fast access region
21 of RAM.  The ACCESS chain field of the second segment
contains a forward pointer to the real address (4689) of the
third and last segment 29 to be written in area 20 and a backward pointer to the real address (1342) of the first segment
27.  The ACCESS chain field of the last segment 29 contains a
forward pointer to the real address (0030) of the ACCESS
header 30 in fast access region 21 and a backward pointer to
the real address (2327) of the second segment 28 in the
chain.

Although the ACCESS chain shown in this example has only
three segments, any number of segments may clearly be linked
in this manner.  New segments are inserted at the head of the
ACCESS chain list producing a last-in-first-out queue.  The
effect of inserting a new segment 31 into the ACCESS chain
shown in Figure 4 and Figure 5 is represented by the dashed
lines in Figure 5.  Thus the forward pointer of the ACCESS
header 30 is re-written to contain the real address (6810) of
new segment 31 and the backward pointer of the ACCESS chain
field of segment 27 is also re-written to contain the real
address (6810) of new segment 31.  The ACCESS chain field of
the new segment is provided with a forward pointer to the
real address (1342) of segment 27, which now becomes the
second segment in the chain, and a backward pointer to the
real address (0030) of the ACCESS chain header 30.  The new
address pointers resulting from the insertion of segment 31
into the ACCESS chain are shown in Figure 5 in brackets.

Clearly, as a result of segment deletion, modification
or drop-out required during execution of the current application, space fragments will occur between storage segments in the working area 20 of RAM.  Each space fragment is provided
with a 6-byte header as shown in Figure 6.  32 bits of space
fragment header are used to contain double-threaded control
addresses linking free space fragments together in a FREE
SPACE chain and the remaining 16 bits are used to record
space fragment length.  Figure 7 shows the FREE SPACE chain
in the same schematic form used to represent an ACCESS chain
in Figure 4.  In this case, space fragments 32 to 35 are
chained together in ascending address order and linked to
SPACE chain header 36 permanently held in a predetermined
location in fast access region 21 of RAM.  In view of the
requirement that space fragments must be linked in ascending
address order entry of a new space fragment, such as fragment
37, to the chain may occur at any point in the chain depending upon the address of the fragment to be added in relation
to the addresses of the existing chained fragment.  Fragmented space is merged with the main body of allocatable free
space at the high address end of working region 20 by movement of data and procedure storage segments across space
fragments.  This migration of storage segments to the low
address end of the working region 20 preserves the contiguous
organisation of segments in the working region and releases
the space fragments to join the allocatable space at the high
address end of the region.  Space recovery in this fashion
normally executes as a background process, however, when
requested space for the executing procedure is unavailable,
then segment drop-out in accordance with a least-recently-
used (LRU) algorithm to be described hereinafter and space
recovery occur synchronously.  Details of space fragment
collection are described in our published patent
specification number 1504112.

A scheduler/dispatcher for the base control program is
provided for the following purpose.  It is desired, as an
important contribution to the ease of writing programs which
personalise the keyboard/screen characteristics of the
terminal, that application programs shall be written as if
they were unaware of, and unconstrained by, the limited
amount of RAM available to the microprocessor.  The hereinbefore mentioned procedures for creating, finding, destroying, enqueuing and dequeuing variable-length storage segments
in the RAM 3 when invoked by a keyboard/screen application
program can be extended to include references to storage
segments outside working region 20 of the RAM by introducing
a co-operating asynchronous process which will fetch a
specified storage segment from the backing store 14 and put
it into working region 20 of RAM.  Accordingly the scheduler/
dispatcher provides means for the keyboard/screen application
program to suspend its execution when a required segment is
not in region 20, and for execution of a backing-store
manager program to be started in order to fetch the segment,
then for resuming execution of the keyboard/screen
application program.  Accordingly the scheduler/dispatcher
maintains semaphore data in a pre-allocated part of the fast
access region 20 of the RAM with some of the semaphores being
assigned to request dispatching of an associated sequential
process and others of the semaphores being assigned to
request suspension of execution of a sequential process until
a specified event shall occur.  As process scheduling and
dispatching is a feature of many computer control systems, no
further description is given.

The virtual memory organisation of the terminal including the single system of addressing, provides the application
program compiler and indirectly the application programmer with the appearance of having access to an indefinitely large
segment store.  The working region 20 of RAM effectively
operates both to contain the application program's 'working
set' of segments, and as a communications channel between the
local backing store 14 and the remote main store 16.  Thus,
in addition to the ACCESS chains which provide the means for
locating segments in the working region 20 of RAM, segments
are linked together in CONTROL chains which effectively label
the segment within the over-all segment traffic flow between
the RAM 3, the backing store 14 and the remote main store 16.

The header for each storage segment (Figure 3) therefore
includes a 32-bit double-threaded CONTROL chain address, as
mentioned above, to chain the segments into one of four
CONTROL chains.  Three of these chains are HOLD chains
linking segments in various queues waiting to be copied
between the working region 20 of RAM, the backing store 14
and main store 16.

The three HOLD chains are respectively identified as
LOCAL, LOCAL/MAIN and MAIN chains.  The organisation of the
three HOLD chains is by means of a system of backward and
forward pointers to the real addresses of the segments in RAM
precisely as described hereinbefore with respect to the
ACCESS chains.  Figure 8 shows schematically a 'hold' chain
using the same notation as that used in Figure 4 to represent
an ACCESS chain.  Thus, in this example, four segments 38 to
41 located at various parts of RAM are chained together and
linked to an associated HOLD control chain header 42 permanently held in a predetermined location in the rapid access
region 21 of RAM.  New segments such as segment 43 are
enqueued into the chain at the head of the list as shown in
Figure 8.

The fourth CONTROL chain is identified as UNMOD chain and links together segments which have not been modified by the current application for drop-out from the working area 20 of RAM on a least-recently-used basis to provide RAM space for new segments.  The organisation of the UNMOD chain is also by a system of backward and forward pointers to the real addresses of the segments in RAM.  Figure 9 shows the UNMOD chain in the same schematic form as used to represent an ACCESS chain in Figure 4, SPACE chain in Figure 7 and a HOLD chain in Figure 8.  Thus, segments 44 to 50 are chained together and linked to an UNMOD chain header 51 permanently held in a predetermined location in fast access region 21 of RAM.  Newly arriving segments for the UNMOD chain such as segment 52 are inserted at approximately the mid-point of the chain.  Should a segment, for example segment 48, be accessed by the executing process then it is promoted to the head of the list as shown in the figure.  This is done by linking list predecessor and successor to exclude the chosen segment from its current position and entering it between the UNMOD chain header and the first in the chain segment.  In this way segments which are infrequently accessed migrate to the tail of the UNMOD chain from where they may be dropped to provide segment space.  The least-recently used algorithm employed in this chain is further described in our aforementioned British Patent Specification Number 1504112.

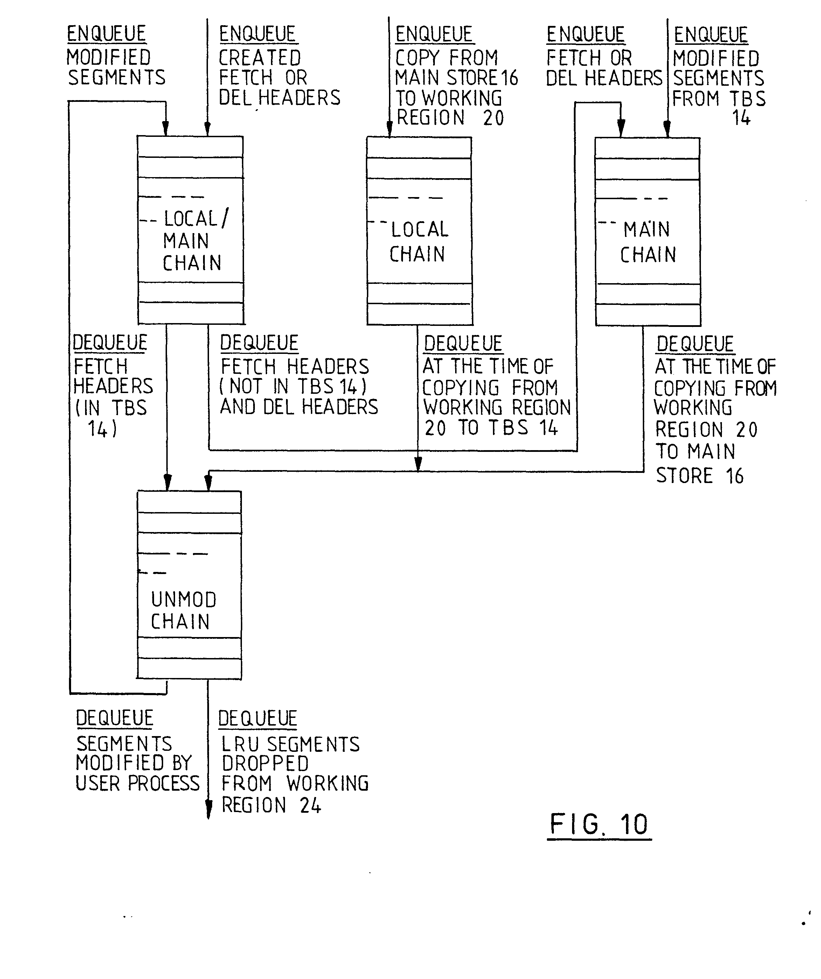

The basic functions of the four control chains will now be described in more detail with reference to Figure 10 which illustrates the segment traffic flow during execution of the selected application.

Storage segments arriving in the working region 20 of RAM over link 9 are initially inserted into the LOCAL chain shown schematically in Figure 10 in block form.  This list of
segments serves as an input queue for the local backing store
function manager for store-through or copying of segments
into the local backing store 14.  The segments are dequeued
from the LOCAL chain and enqueued into the UNMOD chain, also
shown schematically as a block, following store-through of
the segments from working region 20 to the backing store 14.

The UNMOD chain, therefore contains those storage segments in working region 20 whose contents have not been
changed since they were last fetched into region 20 or stored
through to backing store 14.  These segments are maintained
in least-recently used order and may be removed from the
working region 20 at any time to provide extra RAM space for
new segments.  Removal of storage segments from RAM occurs in
least-recently used order as defined by the segment order of
the UNMOD chain.

Storage segments modified, created in RAM or fetched
from local backing store are enqueued into the LOCAL/MAIN
chain.  Thus segments are dequeued from whatever chain they
happen to be in at the time and enqueued into the LOCAL/MAIN
chain.  The segments list in the LOCAL/MAIN chain also serves
as an input queue for the local backing store function
manager.  As soon as segments are stored through from RAM to
the backing store 14, they are dequeued from the LOCAL/MAIN
chain and enqueued into the UNMOD chain or to the MAIN chain
also represented in block form in Figure 10.

The MAIN chain, contains segments which have been stored
through to the local backing stroe 14 and which are awaiting
transmission over the link 9 to the main store 16.  This list
serves as the input queue for the communications link function manager.  The segments dequeued from the MAIN chain
when store through to the main store 16 are enqueued into the
UNMOD chain, as shown in the figure.

In addition to the classification of cache segments by
means of the four CONTROL chains described hereinbefore, each
segment may further be classified by attribute bytes or flags
referred to previously with respect to Figure 3.  The two
flags which are pertinent to the present invention are the
FETCH flag and the DEL flag.

FETCH is a flag used with a dummy segment in the working
region 20 of RAM.  The dummy FETCH segment is a means of
passing page faults from the keyboard/screen process to the
backing store manager.  Multiple page faults can be queued on
a backing store manager by entering FETCH segments first into
the LOCAL/MAIN chain, then for segments which are not in the
local backing store 14 into the MAIN chain (Figure 10).  When
sent from the host processor to the terminal, a dummy FETCH
segment requires the communications link manager to send the
latest copy of the real segment back to the host processor.
When dequeued by a backing store function manager, a dummy
FETCH segment is a request to load the latest copy of the
segment into working region 20 of RAM, or if it is not found,
to pass the FETCH segment via the MAIN queue to the communications link manager.

DEL is a flag used with a dummy segment in working
region 20 indicating that the segment does not exist.  When
received at a backing store, a DEL segment is a request to
delete any previous version which may be in the backing
store.  The DEL flag also has a role in the page fault procedure because the remote main store 16 cannot be allowed not

0043391

to respond to a FETCH request because processes in the
terminal may be waiting on the reply.  Accordingly, if the
main store does not have the segment specified in a FETCH
request its response is to convert the FETCH segment into a
DEL segment and send it back to the terminal.

In order to illustrate how the keyboard screen application program has access to what appears to be an indefinitely
large segment store, the mechanism by which the keyboard/
screen applications 1. accesses a segment which is not in the
RAM 2. allocates storage space when there is no storage space
available in RAM and 3. frees a segment which is not in the
RAM.

In order to access a storage segment for modification,
the keyboard/screen application program in the next higher
layer of microprogram will issue a MODIFY-SEGMENT call
specifying a segment-identifier.  In the first place this
invokes the afore-mentioned LOCATE-SEGMENT procedure which
wil return the address of the segment if it is in the RAM,
and in this case the MODIFY-SEGMENT uses the ENQUEUE-SEGMENT
procedure to enter the segment into the LOCAL/MAIN chain
which as previously said serves as a queue belonging to the
backing-store manager sequential process:  this ensures that
the modified segment will at some later time be copied to the
non-volatile backing store 14.  When however the LOCATE-
SEGMENT procedure indicates that the segment specified for
modification is not in the RAM, then a semaphore is set to
suspend execution of the keyboard/screen application program,
a dummy storage segment of zero length but prefixed by a
16-byte header containing a FETCH flag is created and entered
into the LOCAL/MAIN chain belonging to the backing store
manager sequential process, and a semaphore is set requesting the despatching of the backing store manager sequential
process. When the backing store manager sequential process
is despatched, it uses the DEQUEUE-SEGMENT procedure and in
due course finds the dummy segment whose header bears the
FETCH flag; it initiates a search of the non-volatile store,
and if the desired segment is not found, it uses the
ENQUEUE-SEGMENT procedure to enter the dummy FETCH segment
into the MAIN chain which serves as an input queue belonging
to the host processor communication process which will
initiate a similar search in the host processor storage; when
the desired segment is found either by the local backing
store manager process or, failing that, by the host
processor, the CREATE-SEGMENT procedure is used to allocate
space in the RAM into which the content of the segment can be
copied, after which the semaphore suspending execution of the
keyboard/screen application program is reset and the
MODIFY-SEGMENT procedure is completed as if the segment had
been in the RAM all of the time.

In order to access a segment without modifying its contents, the keyboard/screen application program in the next
higher level of the microprogram will issue a CONNECT-SEGMENT
call specifying a segment identifier. As with MODIFY-
SEGMENT, this invokes the LOCATE-SEGMENT procedure to find if
the segment is already in the RAM or alternatively passes a
dummy FETCH segment header first to the backing store manager
process then to the host processor communication process.
However whereas the final action of MODIFY-SEGMENT was to
ENQUEUE the specified segment in the LOCAL/MAIN chain so that
the modified data will in due course be written to the
backing store 14, the final action of CONNECT-SEGMENT is,
provided that the segment is not already in any of the
LOCAL/MAIN, MAIN or LOCAL chains awaiting writing to the backing store or main store, to ENQUEUE the segment at the
top of the UNMOD chain reserved for unmodified segments.  It
will be observed that after a sequence of enqueuing many
segments at the top of this UNMOD chain the most recently
CONNECT'ed segment will be at the top of the queue and the
least recently CONNECT'ed segment will be at the bottom of
this queue as explained previously.  This fact is used below.

When the keyboard/screen application program in the next
higher level of microprogram issues an ALLOCATE-SEGMENT call,
that in turn invokes the CREATE-SEGMENT procedure.  If
sufficient space exists in RAM to accommodate the desired
segment, then it is allocated at once; otherwise the procedure DEQUEUES the least recently CONNECT'ed segment form the
bottom of the UNMOD chain and makes that space available for
re-allocation.  Fragments of space made available by this
means or by explicit deletion of segments by the application
program are merged together if contiguous, or entered into a
double-threaded space fragment chain if non-continguous as
explained previously.  Accordingly, when a request to
ALLOCATE a new segment finds that sufficient space exists in
the RAM but that the space is fragmented, a semaphore is set
to suspend execution of the keyboard/screen process and a
further semaphore is set to request despatching of a RAM
compaction process.  When in due course the RAM compaction
process is despatched, it physically moves storage segments
in the RAM in the manner described in order to fill non-
contiguous space fragments.  Eventually the space fragments
coalesce into a single large space and the semaphore
temporarily suspending the execution of the keyboard/screen
application program is reset.

Finally when the keyboard/screen application program
wants to release previously allocated storage, it invokes the
FREE-SEGMENT procedure; this calls the DESTROY-SEGMENT procedure either to destroy the specified segment at once if it
is in the RAM, or else to create a dummy segment prefixed
with a 16-byte header containing a DELETE flag and to ENQUEUE
it for writing to the backing store in order to ensure that
if a copy of the segment had previously been sent to the backing store, it will be deleted there as well as in the RAM.

In order to reduce the frequency of having to execute
the RAM compaction process when space fragmentation occurs, a
final asynchronous process is available for despatch when no
higher priority work is available for the microprocessor.
This lowest priority process moves the least recently
LOCATE'd segment to the high-address end of RAM, then moves
the second least recently LOCATE'd segment adjacent to it,
then the third least recently LOCATE'd segment adjacent the
second least recently LOCATE'd segment and so on as long as
no higher priority work is available.  As a result of the
operation of this background sorting process, when in response to an ALLOCATE-SEGMENT request it is necessary to
release space by dropping the least recently LOCATE'd segment
or segments, then the space so obtained will at once be
contiguous and available for re-allocation without needing to
invoke the RAM compaction process.

It has been shown thus that programs using the
ALLOCATE-SEGMENT, CONNECT-SEGMENT, MODIFY-SEGMENT and
FREE-SEGMENT procedures can be freed from dependency on the
size and organisation of RAM.  However it may be said that
the mechanism described above for achieving such storage-

0043391

independence relies on the movement of procedure and/or data
in RAM, and that it will be difficult to write programs when
both procedures and data are subject to unpredictable
movement.  The invention here described has the considerable
advantage that it enables application programs to be written
in the high level programming language PL/I which contains
the concepts of based variables, where a based variable is
held in a contiguous piece of storage addressed by a variable
known as a pointer.  For a description of PL/I see OS PL/I
Checkout and Optimizing Compilers: Language reference manual,
available under order number GC 33-0009 published by
International Business Machines Corporation.  Accordingly,
when a program written using pointers and based variables is
compiled to execute in the virtual memory terminal, then for
each pointer declared by the programmer, a 32-bit storage
area herein referred to as a "locator" is reserved in fixed
storage.  When storage is created for a based variable
assocated with that pointer, a storage segment is allocated
with the precise length specified by the application program,
the address of the storage segment is put in the locator, and
the address of the locator is put in the 14th and 15th bytes
of the header prefixed to that segment.  This locator address
header field is known as the "locator back-pointer" (LBP)
field, and is shown in Figure 3.  Further, when the storage
segment is copied to the local backing store 14 and dropped
out of the RAM, the segment identifier for the segment is put
in the locator.  The segment identifiers from locators can in
turn be copied into based variables in the virtual memory if
the programmer chooses to declare an array of pointers as a
based variable.  Accordingly, an intermediate layer of
microcode between the application program and the storage
management procedures maintains the locators and locator back
pointers with the result that the application program is
totally unaware of the movement of the data.

UK9-80-005                          1


CLAIMS:


1.   A data processing terminal incorporating a microprocessor, a non-volatile read-only store for storing primitive
instruction codes for said microprocessor, and a random
access memory for receiving and storing application procedure
and data in the form of variable length records, means operable in response to identification of a selected application
to be run in said terminal to load procedure records to
perform said application and data records to be operated on
during execution of said application into said random access
memory as required, each record being provided with an
individual header and being stored contiguously as variable
length segments in successive free storage locations in said
random access memory, each segment being linked in accordance
with predetermined address pointer rules to other selected
segments for subsequent access by means of address pointers
inserted in the segment headers, means for identifying and
copying selected procedure (and possibly data) into a pre-
allocated region of said random access memory, said copied
procedure (and possibly data) constituting directly addressable code effective under control of said microprocessor to
configure said terminal to interact with data and procedure
segments in said random access memory in accordance with the
requirements of the selected application, said microprocessor
being operable during use to modify segments, and create new
segments as required during execution of said application; to
delete segments on a priority basis in order to provide
additional space in said random access memory; to re-arrange
segments so as to restore contiguity of said segments within
said random access memory, should this be broken as a result
of running said application; and to modify said address
pointers as required to maintain the integrity of said predetermined address pointer rules.

2.   A data processing terminal as claimed in claim 1, in
which said segments are selectively linked to other segments
and to associated segment chain headers to form a plurality
of segment chains, the segment headers being stored in a
predetermined fixed region in random access storage, each
header containing the real address of the first and last
segment in its associated chain, the address pointer in each
segment containing the real address of preceding and succeeding segments in the chain, whereby a segment in a selected
chain may be accessed by means of a progressive logical
search through the chain starting with the segment header
associated with that chain.

3.   A data processing terminal as claimed in claim 2, in
which said segment chains include a plurality of access
chains by means of which all segments in said random access
memory are linked for subsequent access, an access chain
header containing the real address of the first and last
segments in its chain being provided for each access chain
and each segment header including an access pointer field
containing the real addresses of preceding and succeeding
segments in the associated chain.

4.   A data processing terminal as claimed in claim 3, in
which each segment is labelled with a predetermined segment
identifier inserted in its header, and the access chain with
which a segment is to be associated, or is already associated, being determined by means of a hashing operation on
said segment identifier, said hashing operation being effective to distribute segments randomly over the plurality of
access chains.

5.    A data processing terminal as claimed in any one of the
preceding claims, operable under control of said microprocessor to copy selected data and procedure records from and
to said random access memory to or from one or more
auxilliary storage units associated with said terminal.

6.    A data processing terminal as claimed in claim 5, in
which said auxilliary storage units comprise a local backing
store and/or a remote main store forming part of an independent central processing unit.

7.    A data processing terminal as claimed in claim 6 and in
claim 2, in which said segment chains include a plurality of
control chains by means of which the status of all segments
in random access memory is made available to said microprocessor and by which they are identified for subsequent
access, each control chain having a control chain header containing the real addresses of the first and last segments in
its chain, and each segment linked to a control chain having
a segment header including a control pointer field containing
the real addresses of preceding and succeeding segments in
that associated chain.

8.    A data processing terminal as claimed in claim 7, in
which said control chains include a plurality of hold chains
each serving to link segments in queues indicating their
availability for copy between said random access memory, the
local backing store, and remote main store; and a least-
recently-used chain maintaining a list of segments available
for deletion from said random access memory.

9.    A data processing terminal as claimed in claim 8, in
which segments for linking in said least-recently-used chain are inserted in the chain at approximately mid-way through the list of segments in the chain, means operable following access of a segment held in said least-recently-used chain to promote the segment to the head of the chain whereby segments least recently used by said application migrate to the foot of the chain.

10.   A data processing terminal as claimed in any one of the preceding claims, in which predetermined fixed locator regions are allocated in random access memory for storing real addresses of pre-selected segments, the headers of segments including an additional address field indicating an association or otherwise with said locator regions and, if such an association exists, for storing the real addresses of said associated locator, searches for segments being initiated simultaneously in response to segment requests from said microprocessor controller through said locator regions and said segment chain headers.

1/5

0043391

FIG.1

FIG.2

STORAGE
SEGMENT

| CONTROL CHAIN ADDRESSES | ACCESS CHAIN ADDRESSES | SEGMENT IDENTIFIER | LENGTH + FLAGS | LOCATOR ADDR. (LBP) | VARIABLE LENGTH PROCEDURE OR DATA | |
|---|---|---|---|---|---|---|

BYTE No.  0          4          8          12    14    16                    0        4

← LOW ADDRESS

HIGH ADDRESS →

## FIG. 3

2/5

FREE SPACE FRAGMENT

| SPACE CHAIN ADDRESSES | LENGTH | VARIABLE LENGTH FREE SPACE FRAGMENT |
|---|---|---|

0          4      6                                                    0

## FIG. 6

0043391

3/5

0043391

ACCESS CHAINS (x16)
FIG. 4

FREE SPACE CHAIN
FIG. 7

UNMOD CHAIN

FIG. 9

HOLD CHAINS (x3)
FIG. 8

FIG. 5

21

20

31

27

CONTROL CHAIN ADDRESSES | 2 3 2 7 | 0 0 3 0 (6 8 1 0) | SEGMENT IDENT. | LENGTH, FLAG | LBP | DATA

1342

0030

1 3 4 2 (6 8 1 0) | 4 6 8 9

30

6810

1 3 4 2 | 0 3 0 0

28

2327

4 6 8 9 | 1 3 4 2

29

4689

0 0 3 0 | 2 3 2 7

33

4/5

0043391

0043391

FIG. 10

European Patent
Office

EUROPEAN SEARCH REPORT

0043391

Application number

EP 80 30 2192

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |

| | | | G 06 F 13/00 |
|---|---|---|---|
| | PROCEEDINGS OF THE SPRING JOINT COMPUTER CONFERENCE, 5th-7th May 1970, published by AFIPS, pages 683-690 · New York, U.S.A. C. CHRISTENSEN et al.: "A multi-programming, virtual memory system for a small computer" <br><br> * Page 683, left-hand column, lines 1-6; page 683, right-hand column, last paragraph - page 687, left-hand column, paragraph 2 * <br><br> -- | 1-6, 10 | |

TECHNICAL FIELDS
SEARCHED (Int. Cl.³)

| | | | G 06 F 13/00 |
|---|---|---|---|
| | INFORMATION PROCESSING LETTERS, vol. 1, no. 3, February 1972, published by North-Holland Amsterdam, NL. A. VAN DAM et al.: "Software data paging and segmentation for complex systems" <br><br> * Page 82, left-hand column, paragraph 2 - page 85, right-hand column, paragraph 1 * <br><br> -- | 1,2,5-9 | |
| | COMPUTER DESIGN, vol. 10, no. 6, June 1971, pages 49-54 Concord, U.S.A. W.W. FARR et al.: "An optimum disc organization for a virtual memory system" <br><br> * Page 51, right-hand column; paragraph 3 - page 53, right-hand column, paragraph 2; page 54, right-hand column, paragraphs 1-6; figure 5 * <br><br> -- <br><br> ./. | 1,2,5, 6 | |

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search <br> The Hague | Date of completion of the search <br> 24-04-1981 | Examiner <br> WEBER |

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>US - A - 3 829 837</u> (FARR) <br> * Column 1, lines 14-37; column 3, line 13 - column 6, line 62; column 8, lines 38-66; column 9, line 61 - column 11, line 49; figures 2A,4 * <br><br> -- | 1,2,5, 6 | |
| D | <u>GB - A - 1 504 112</u> (IBM) <br> * Page 2, lines 41-87; page 4, line 38 - page 8, line 45; figures 1,5-7,9,10 * <br><br> ---- | 1,2,5- 9 | |
| | | | TECHNICAL FIELDS SEARCHED (Int. Cl.³) |

EPO Form 1503.2  06.78